# EUROPEAN PATENT APPLICATION

(11) **EP 1 919 074 A2**
(43) Date of publication of application: **07.05.2008**
(21) Application number: 07254296.2
(22) Date of filing: 30.10.2007
(51) Int. Cl.: H02P 1/46, H02P 6/22

(54) **Electronic start control device for a synchronous motor**

(30) Priority: 31.10.2006 CN 200610143217
(71) Applicant: Johnson Electric S.A., 2300 La Chaux-de-Fonds (CH)
(72) Inventor: Tse, Kwok Kuen, Tai Po Hong Kong (CN); Wang, En Hui, Tai Po Hong Kong (CN)
(74) Representative: Hocking, Adrian Niall

(57) **Abstract**

An electronic start control device for unidirectionally rotating a permanent-magnet rotor (14) of a synchronous motor (10), comprises: a static switch (22) for series connection to a winding of a stator (12) of the synchronous motor (10); and a position sensor (24) for detecting a position of the rotor (14) of the synchronous motor (10) and for providing a corresponding output (P_{con}). The device is characterised by including an AC to AC converter (26) having an input (Vₐ) from an alternating current-voltage source (V_{ac}) at a fixed frequency connected in series with the stator (12) of the synchronous motor (10), and a single output (V_{c}) derived from the voltage input (Vₐ); and an XNOR unit (28) having a first input (G₁) in communication with the output (V_{c}) of the AC to AC converter (26), a second input (G₂) in communication with an output (P) of the position sensor (24), and an output (G_{O}) in communication with the static switch (22). The static switch (22) is controllable by a signal (G_{con}) output from the XNOR unit (28), so that the rotor (14) of the synchronous motor (10) only rotates in a single direction. Preferably, the AC to AC converter is a phase-shifter (26).

## Description

### Background of the Invention

This invention relates an electronic start control device for controlling a permanent-magnet rotor of a synchronous motor, so that rotation only occurs in one direction, and also to a synchronous motor having said electronic start control device.

Electronic start control devices for synchronous motors are known. However, these are only concerned with starting the motor, which is problematic due to the rotor having to achieve synchronous speed with a mains frequency power supply in a very short period. One such device is suggested in EP0574823A.

The rotor of a standard or typical synchronous motor rotates in either of two directions. Consequently, the rotor can only drive a bidirectional device, such as a blade or impeller of, for example, a water drain pump for a washing machine or dishwasher. Typically, the bidirectional device will therefore not be as efficient as a unidirectional device.

Other common disadvantages of synchronous motors are that the rotor can be extremely difficult to turn under very low nominal mains voltages, for example +/-30%, and that demagnetisation of the rotor tends to occur under very high nominal mains voltages.

Reliability and cost-effectiveness are also highly important factors.

The present invention seeks to provide a solution to these problems.

### Summary of the Invention

According to a first aspect of the invention, there is provided an electronic start control device for unidirectionally rotating a permanent-magnet rotor of a synchronous motor, the device comprising : a static switch for series connection to a winding of a stator of the synchronous motor; and a position sensor for detecting a position of the rotor of the synchronous motor and for providing a corresponding output; characterised by the device including an AC to AC converter having an input from an alternating current-voltage source at a fixed frequency connected in series with the stator of the synchronous motor, and a single output derived from the voltage input; and an XNOR unit having a first input in communication with the output of the AC to AC converter, a second input in communication with an output of the position sensor, and an output in communication with the static switch, the static switch being controllable by a signal output from the XNOR unit so that the rotor of the synchronous motor only rotates in a single direction.

Preferably, the AC to AC converter is a phase shifter.

Preferably, the AC to AC converter has two voltage inputs (Vₐ' ; V_{b}').

Preferably, a diode is connected to one of the voltage inputs (V_{b}') of the phase-shifter.

Preferably, the static switch is a triac.

Preferably, the position sensor is a Hall-effect sensor.

Preferably, the AC to AC converter outputs a signal (*v*_{con}; *v*_{con}') having a phase lag (λ) in a range of 90 degrees to 180 degrees.

Preferably, the fixed frequency is in the range of 50 to 60 Hz.

According to a second aspect of the invention, there is provided an electronic start control device for unidirectionally rotating a permanent-magnet rotor of a synchronous motor, the device comprising : a static switch for series connection to a winding of a stator of the synchronous motor; and a position sensor for detecting a position of the rotor of the synchronous motor and for providing a corresponding output; characterised by the device including a phase-shifter having two voltage inputs from an alternating current-voltage source at a fixed frequency connected in series with the stator of the synchronous motor, and a single output derived from the voltage input; and an XNOR unit having a first input in communication with the output of the phase-shifter, a second input in communication with an output of the position sensor, and an output in communication with the static switch, the static switch being controllable by a signal output from the XNOR unit so that the rotor of the synchronous motor only rotates in a single direction.

According to a third aspect of the invention, there is provided a synchronous motor having a permanent-magnet rotor and a stator connected in series with an alternating current-voltage source at fixed frequency, the motor including an electronic start control device in accordance with the first or second aspects of the invention by which the rotor is controlled to only rotate in one direction.

Preferably, the synchronous motor further includes a unidirectional blade drivable by the rotor.

### Brief Description of the Drawings

The invention will now be more particularly described, by way of example only, with reference to the accompanying drawings, in which :
Figure 1 is a schematic view of a synchronous motor having two stator poles and a permanent-magnet rotor, and showing a position sensor for the rotor;
Figure 2 shows a graph of general waveforms of mains voltage and current by which the synchronous motor is operated, and an output signal of the position sensor;
Figure 3 shows a circuit diagram of a first embodiment of an electronic start control device, according to the first aspect of the invention, which is used to start the rotor of the motor in a single direction;
Figures 4a to 4c show a schematic view of the synchronous motor, similar to Figure 1, and graphs which show the starting principle in order to achieve unidirectional rotation of the rotor;
Figures 5a to 5c show the waveforms of the voltage, current and position signal, when the rotor is running under a heavy-load; the signal output from the phase shifter; and the waveforms of the voltage, current and position signal, when the rotor is running under a light-load, respectively;
Figure 6 shows a comparison between varying voltage and a signal outputted by a phase-shifter of the electronic start control device; and
Figure 7 is a circuit diagram, similar to that shown in Figure 3, of a second embodiment of an electronic start control device, according to the second aspect of the invention.

### Detailed Description of the Preferred Embodiments

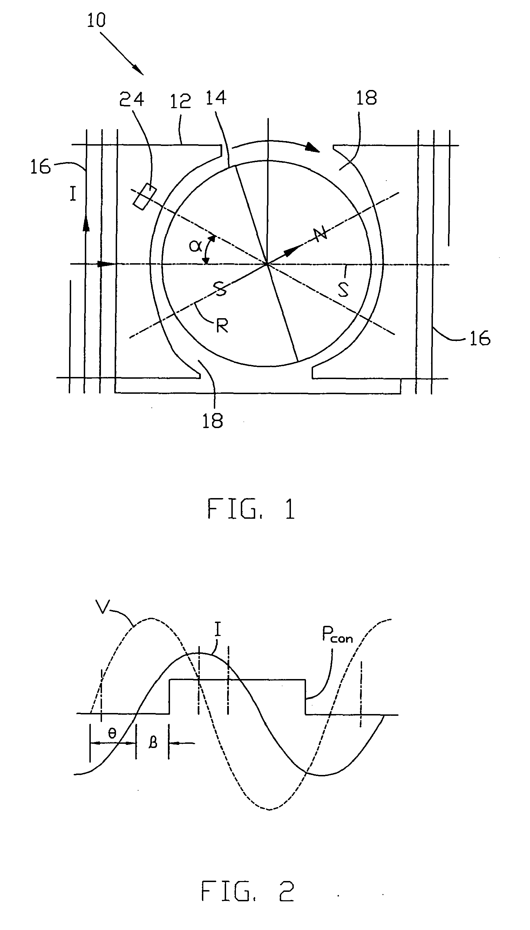

Referring firstly to Figures 1 to 6 of the drawings, a synchronous motor 10 comprises a fixed stator 12, a rotor 14 rotatably located between pole pieces of the stator 12, and windings 16 formed on or adjacent to the pole pieces of the stator 12 and connected in series.

In order to impart a starting torque to the rotor 14, asymmetric air gaps 18 are formed between adjacent surfaces of the stator 12 and the rotor 14, so that the polar axes R and S of the rotor 14 and the stator 12, respectively, will be angularly offset by an angle α during the stopped or stalled condition.

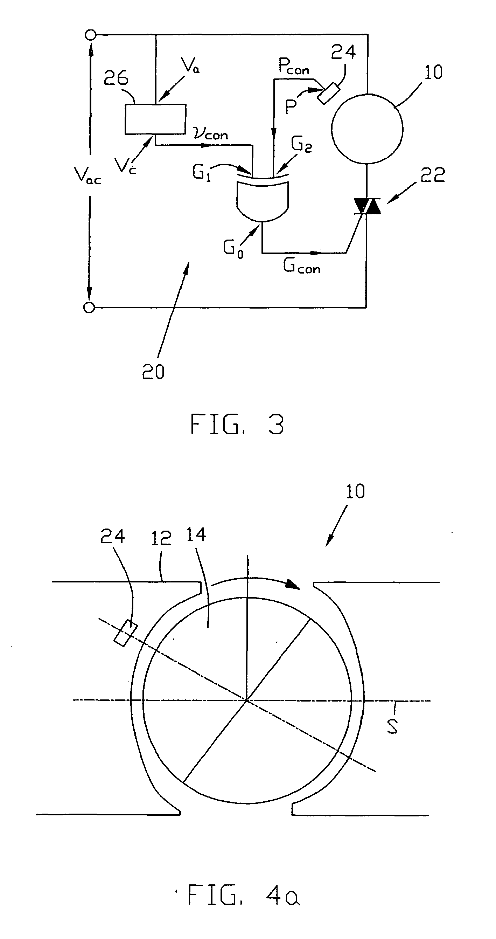

Referring to Figure 3, the windings 16 of the stator 12 are connected in series with a sinusoidal alternating current-voltage source V_{ac} having a fixed, typically mains, frequency, preferably being in the range of 50 to 60 Hz. The alternating current-voltage source V_{ac} can be supplied by mains electricity, for example.

A first embodiment of an electronic start control device 20 is shown in Figure 3, and comprises a static switch 22, typically in the form of a triac, a position sensor 24, typically in the form of a Hall-effect sensor, a phase-shifter 26, and an XNOR unit 28.

The static switch 22 is connected in series with the alternating current-voltage source V_{ac} and the windings 16 of the stator 12 of the motor 10.

The position sensor 24 is located on or within the stator 12, offset by an angular displacement α from the polar axis S of the stator 12. The polarity, and thus position of the rotor 14 is determined via the position sensor 24, both when the rotor 14 is stopped and during operation of the motor 10.

The phase-shifter 26 has an input Vₐ taken directly from the alternating current-voltage source V_{ac}. A single output signal *v*_{con} outputted from an output V_{c} of the phase-shifter 26 is thus based on the voltage of the alternating current-voltage source V_{ac}. The phase-shifter 26 imparts a phase lag X on the output signal *v*_{con} which is between 90 degrees and 180 degrees, depending on the load on the rotor 14.

The output V_{c} of the phase-shifter 26 and an output P of the position sensor 24 are connected to respective inputs G₁ and G₂ of the XNOR unit 28, and the output Gₒ of the XNOR unit 28 is connected to the static switch 22. The static switch 22 is thus controlled via a signal G_{con} outputted from the XNOR unit 28.

The electronic start control device 20 thus regulates the starting direction of the rotor 14, so that the rotor 14 only rotates in one single direction.

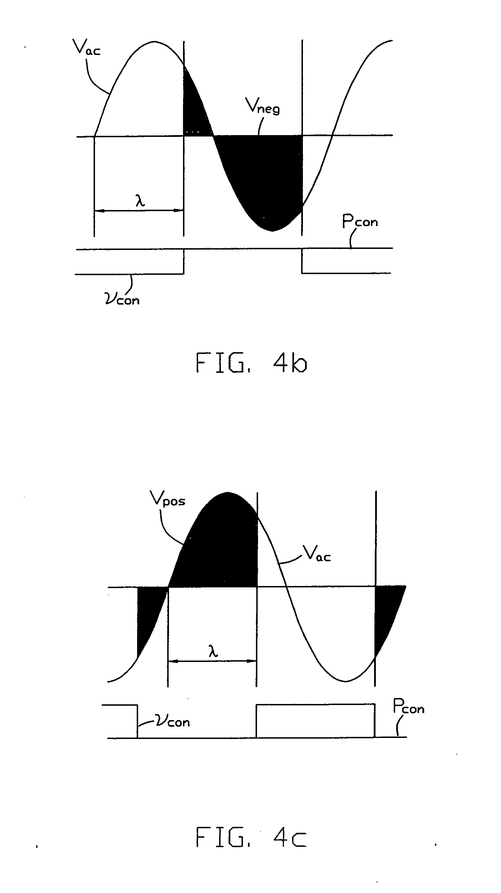

Referring to Figures 4a to 4c, the starting phase of the rotor 14 is now described. If the position sensor 24 determines that the South pole of the permanent-magnet rotor 14 is facing it, a signal P_{con} which is outputted is HIGH, equating to logic 1. The phase-shifter 26 also outputs the signal *v*_{con} with a suitable phase lag X which, when it goes HIGH (logic 1), corresponds to a negative average voltage V_{neg} (Figure 4b) of the alternating current-voltage source V_{ac}. With both signals *v*_{con} and P_{con} to the XNOR unit 28 being logic 1, the output G_{con} is also logic 1, and thus the static switch 22 is closed to complete the circuit.

Since the output *v*_{con} of the phase-shifter 26 corresponds to a negative average voltage, the stator 12 assumes the same polarity as the pole of the rotor 14 detected by the position sensor 24. In the configuration shown in Figure 4a, the rotor 14 is thus moved in a clockwise direction.

Similarly, if the position sensor 24 determines that the North pole of the rotor 14 is facing it in a stalled condition (Figure 4a), the signal P_{con} which is outputted is LOW, equating to logic 0. The phase-shifter 26 also outputs the signal *v*_{con} with a suitable phase lag λ which, when it goes LOW (logic 0), corresponds to a positive average voltage Vₚₒₛ (Figure 4c) of the alternating current-voltage source V_{ac}. With both signals *v*_{con} and P_{con} at the XNOR unit 28 being logic 0, the output signal G_{con} is logic 1, and thus the static switch 22 is again closed to complete the circuit.

Since the output signal *v*_{con} of the phase-shifter 26 corresponds to a positive average voltage, the stator 12 again assumes the same polarity as the pole of the rotor 14 detected by the position sensor 24. In the configuration shown in Figure 4a, the rotor 14 is thus again moved in a clockwise direction.

Referring to Figure 2, general waveforms of the voltage V and current I of the alternating current-voltage source V_{ac}, and the signal P_{con} outputted from the position sensor 24 are shown. A power factor angle θ indicates the magnitude of the motor load. Generally, the power factor angle θ approaches 90 degrees under light load, and 0 degrees under heavy load. The position sensor output signal P_{con} lags the current at an angle of β, which is larger than the angle α between the polar axis S of the stator 12 and the location of the position sensor 24. Depending on the motor load, β generally tends to the angle α when the rotor 14 is under light load, and tends to α plus 90 degrees when the rotor 14 is under heavy load.

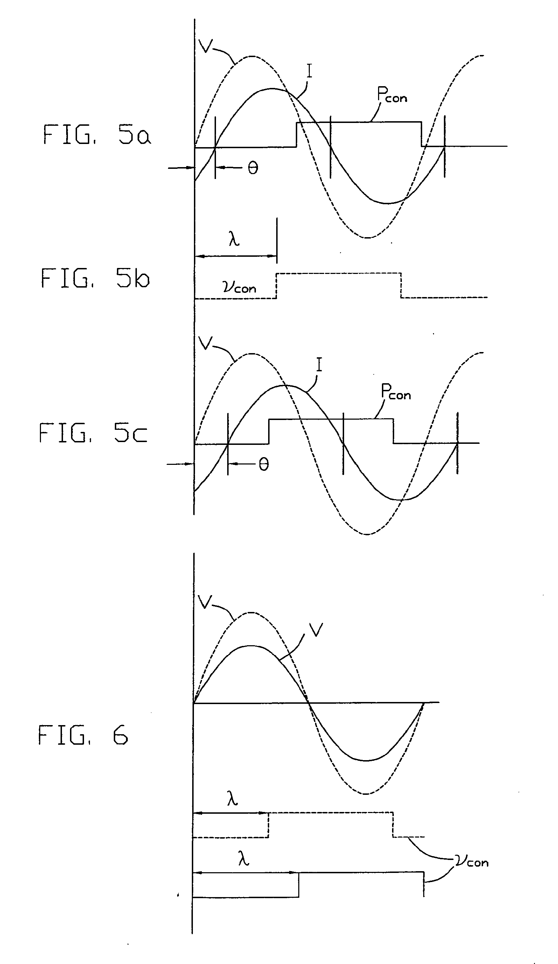

Now, referring to Figures 5a to 5c, the running phase of the synchronous motor 10 is described. The waveforms of voltage V and current I of the alternating current-voltage source V_{ac} are shown, along with the output signal P_{con} of the position sensor 24. Figure 5a reflects the waveforms, when the rotor 14 is under heavy load, and Figure 5c reflects the waveforms when the rotor 14 is under light load. As can be appreciated, under heavy load, the power factor angle θ is tending towards 0 degrees, with the current I lagging the voltage V by a lesser degree; and under light load, the power factor angle θ is tending towards 90 degrees, with the current I lagging the voltage V by a greater degree.

Consequently, providing the static switch 22 is triggered prior to the zero-crossing of the current I, the rotor 14 will continue to rotate. As such, similarly to the starting phase described above, the XNOR unit 28 continuously controls the static switch 22 in accordance with the logic of the output signals *v*_{con} and P_{con} of the phase-shifter 26 and the position sensor 24, respectively. This can be appreciated when comparing Figures 5a to 5c.

With reference to Figure 6, to overcome the possibilities of demagnetization of the rotor 14 due to excessive winding current in the stator 12, and also insufficient torque to start the rotation of the rotor 14, whilst also adhering to a requested nominal voltage range, for example +/- 30%, the output signal *v*_{con} of the phase-shifter 26 is based on the r.m.s. level of the voltage V of the alternating current-voltage source V_{ac}. Consequently, as can be understood from Figure 6, the higher the voltage V, the smaller the phase lag λ of the signal *v*_{con} outputted from the phase-shifter 26, and *vice versa.* By setting the minimum phase lag λ of the signal *v*_{con} outputtable by the phase-shifter 26 toward 90 degrees, the current provided to the windings 16 of the stator 12 is limited under the maximum voltage of the nominal voltage range. However, by setting the maximum phase lag X of the signal *v*_{con} outputtable by the phase-shifter 26 toward 180 degrees, sufficient current to operate the rotor 14 can still be provided to the windings 16, when under a condition of minimum voltage within the nominal voltage range.

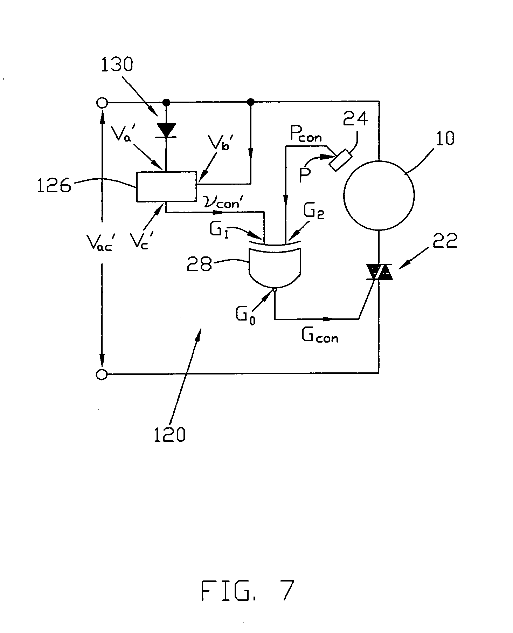

Figure 7 shows a second embodiment of an electronic start control device 120. The device 120 is similar to that of the first embodiment, aside from the voltage inputs to a phase-shifter 126.

The phase-shifter 126 now has two voltage inputs Vₐ' and V_{b}', one taken directly from the alternating current-voltage source V_{ac}', and the other taken via a diode 130 connected in series with the phase-shifter 126 and the alternating current-voltage source V_{ac}'. A single output signal *v*_{con}' outputted from an output V_{c}' of the phase-shifter 126 is thus based on the voltage of the alternating current-voltage source V_{ac}', and a half-wave of the alternating current-voltage source V_{ac}'. The phase-shifter 126 imparts a phase lag on the output signal *v*_{con}' which is between 90 degrees and 180 degrees, depending on the load on the rotor of the motor 110.

Although a phase-shifter is suggested, any suitable AC to AC converter can be utilised. For example, an attenuator and/or a filter can be used. A combination of devices can also be utilised.

Although only a two pole permanent-magnet rotor 14 has been described above, the electronic start control device can be used with a synchronous motor having a greater number of poles.

The static switch, although preferably a triac, can be in the form of a SCR, transistor, or any other suitable device.

Although the position sensor has been suggested as being a Hall-effect sensor, any other suitable device can be utilised, for example, a photoemitter / photodetector device, or any inductive-type coupler or coil.

The XNOR unit is a logic-functional unit, and can be realized by a circuit in the form of transistor, opamp, or any programmable device. The XNOR unit can also be a physical chip or a logic gate.

The synchronous motor is typically operated at mains frequency. However, other fixed frequencies are conceivable.

It is thus possible to provide a low cost and robust electronic start control device for unidirectionally rotating a permanent-magnet rotor. Consequently, a device to which the combined synchronous motor and electronic start control device is applied can utilise unidirectional elements drivable by the motor, instead of bidirectional elements. For example, a unidirectional blade or impeller can be used in a water pump incorporating such a combined motor and electronic device, resulting in improved efficiencies.

Furthermore, by the use of the electronic start control device, acoustic noise resulting from the previously bidirectional operation of the rotor and any element driven by the rotor is reduced or eliminated.

A smooth start of the rotor at a low mains voltage condition is also possible, while a starting current is limited during high mains voltage conditions, thus protecting the magnetisation of the rotor.

The electronic start control device utilises currentless detection to determine the position of the rotor of the motor, and thus the direction in which the rotor is to be moved.

The embodiments described above are given by way of example only, and various modifications will be apparent to persons skilled in the art without departing from the scope of the invention, as defined by the appended claims. For example, in the first embodiment, the diode can be provided internally within the AC to AC converter or phase-shifter; and in the second embodiment, the diode can be dispensed with, or again provided internally within the AC to AC converter or phase-shifter.

## Claims

1. An electronic start control device for unidirectionally rotating a permanent-magnet rotor (14) of a synchronous motor (10; 110), the device comprising :
a static switch (22) for series connection to a winding of a stator (12) of the synchronous motor (10; 110); and
a position sensor (24) for detecting a position of the rotor (14) of the synchronous motor (10; 110) and for providing a corresponding output (P_{con});
**characterised by** the device including an AC to AC converter (26; 126) having an input (Vₐ ; Vₐ') from an alternating current-voltage source (V_{ac} ; V_{ac}') at a fixed frequency connected in series with the stator (12) of the synchronous motor (10; 110), and a single output (V_{c}; V_{c}') derived from the voltage input (Vₐ ; Vₐ'); and
an XNOR unit (28) having a first input (G₁) in communication with the output (V_{c}; V_{c}') of the AC to AC converter (26; 126), a second input (G₂) in communication with an output (P) of the position sensor (24), and an output (Go) in communication with the static switch (22), the static switch (22) being controllable by a signal (G_{con}) output from the XNOR unit (28) so that the rotor (14) of the synchronous motor (10; 110) only rotates in a single direction.

2. An electronic start control device as claimed in Claim 1, wherein the AC to AC converter is a phase shifter (26; 126).

3. An electronic start control device as claimed in Claim 1 or Claim 2, wherein the AC to AC converter has two voltage inputs (Vₐ'; V_{b}').

4. An electronic start control device as claimed in Claim 3, further comprising a diode (130) connected to one of the voltage inputs (V_{b}') of the phase-shifter (126).

5. An electronic start control device as claimed in any one of the preceding claims, wherein the static switch (22) is a triac.

6. An electronic start control device as claimed in any one of the preceding claims, wherein the position sensor (24) is a Hall-effect sensor.

7. An electronic start control device as claimed in any one of the preceding claims, wherein the AC to AC converter (26; 126) outputs a signal (*v*_{con}; *v*_{con}') having a phase lag (λ) in a range of 90 degrees to 180 degrees.

8. An electronic start control device as claimed in any one of the preceding claims, wherein the fixed frequency is in the range of 50 to 60 Hz.

9. An electronic start control device for unidirectionally rotating a permanent-magnet rotor (14) of a synchronous motor (110), the device comprising :
a static switch (22) for series connection to a winding of a stator (12) of the synchronous motor (110); and
a position sensor (24) for detecting a position of the rotor (14) of the synchronous motor (110) and for providing a corresponding output (P_{con});
**characterised by** the device including a phase-shifter (26; 126) having two voltage inputs (Vₐ', V_{b}') from an alternating current-voltage source (V_{ac}') at a fixed frequency connected in series with the stator (12) of the synchronous motor (110), and a single output (V_{c}') derived from the two voltage inputs (Vₐ, V_{b}); and
an XNOR unit (28) having a first input (G₁) in communication with the output (V_{c}') of the phase-shifter (126), a second input (G₂) in communication with an output (P) of the position sensor (24), and an output (Go) in communication with the static switch (22), the static switch (22) being controllable by a signal (G_{con}) output from the XNOR unit (28) so that the rotor (14) of the synchronous motor (110) only rotates in a single direction.

10. A synchronous motor having a permanent-magnet rotor (14) and a stator (12) connected in series with an alternating current-voltage source (V_{ac} ; V_{ac}') at fixed frequency, the motor (10; 110) including an electronic start control device (20; 120) as defined in any one of the preceding claims by which the rotor (14) is controlled to only rotate in one direction.

11. A synchronous motor as claimed in Claim 10, further including a unidirectional blade drivable by the rotor (14).
